# EUROPÄISCHE PATENTSCHRIFT

(11) **EP 1 957 422 B1**
(45) Veröffentlichungstag und Bekanntmachung des Hinweises auf die Patenterteilung: **01.02.2012**
(21) Anmeldenummer: 06818948.9
(22) Anmeldetag: 01.12.2006
(51) Int. Cl.: C03C 21/00, C03C 23/00, B41M 5/26

(54) **VERFAHREN ZUR MARKIERUNG VON EINSCHEIBENSICHERHEITSGLAS**
METHOD FOR MARKING SINGLE PANE SECURITY GLASS
PROCEDE POUR MARQUER DU VERRE DE SECURITE TREMPE

(30) Priorität: 02.12.2005 DE 102005057916
(43) Veröffentlichungstag der Anmeldung: 20.08.2008
(73) Patentinhaber: boraident GmbH, 06118 Halle/Saale (DE)
(72) Erfinder: RAINER, Thomas, 38855 Wernigerode (DE); BOREK, Reinhard, 06110 Halle (DE)
(74) Vertreter: Cohausz Hannig Borkowski Wißgott
(86) Internationale Anmeldenummer: PCT/EP2006/011550
(87) Internationale Veröffentlichungsnummer: WO 2007/062860

(56) Entgegenhaltungen:
- EP-A2- 1 110 660
- WO-A2-02/085807
- JP-A- 2 225 347
- US-A1- 2003 015 509
- RAINER T: "WIRD FENSTERGLAS ZUM HIGH-TECH-MATERIAL? KLEINE TEILCHEN, GROSSE WIRKUNG" GLASWELT: DEUTSCHE GLASERZEITUNG, GENTNER VERLAG, STUTTGART, DE, Nr. 6, 2000, Seiten 46-51, XP001107265 ISSN: 0017-1107
- Pfaender, H.G.: "Schott Glaslexicon", 1997, MVG, Germany ISBN: 9783478052405 pages 68-71, * page 68 - page 71 *

## Beschreibung

Die Erfindung betrifft ein Verfahren zur Markierung von Einscheibensicherheitsglas, welches durch eine Temperaturbehandlung aus Einscheibenglas hergestellt wird.

Derartige Verfahren zur Herstellung von Einscheibensicherheitsglas sind im Stand der Technik hinlänglich bekannt, beispielsweise aus dem "Schott Glaslexikon". Hierzu wird ein Einscheibenglas, welches auf gewünschte Maße gefertigt ist, einer bestimmten Temperaturbehandlung unterzogen, um so Einscheibensicherheitsglas zu bilden, welches bei einem Bersten statt in große, scharfkantige Stücke in viele kleine stumpfkantige Glassplitter zerfällt. Derartiges Glas wird beispielsweise bei Kraftfahrzeugseitenscheiben sowie auch üblicherweise bei Überkopfverglasungen eingesetzt.

Die Temperaturbehandlung erfolgt üblicherweise derart, dass das Einscheibenglas bis auf ein bestimmtes Temperaturniveau für eine gewisse Zeit lang erhitzt und sodann relativ schnell abgekühlt wird, um die erzeugten Spannungen im Glas "einzufrieren".

Dabei ist es bekannt, Einscheibensicherheitsglas nach dessen Herstellung entsprechend als solches zu markieren, damit nachträglich noch festgestellt werden kann, ob es sich bei einer Glasscheibe um Normalglas oder um ein Einscheibensicherheitsglas handelt.

Dabei ist festzuhalten, dass sich Einscheibensicherheitsglas mit der entsprechenden sicherheitsrelevanten Qualität nur dann ausgebildet, wenn die Temperaturbehandlung vorbestimmte Kriterien, wie bestimmte Dauer und bestimmtes Temperaturniveau einhält. Das Einhalten derartiger Bedingungen kann jedoch an einer im Stand der Technik bekannten, üblicherweise nachträglich angebrachten Markierung nicht erkannt werden.

Das Dokument WO02/085807 A2 beschreibt ein Verfahren, bei dem in Glas mittels Laserbestrahlung durch ein Metallionen-Spendermedium hindurch Markierungen erzeugt werden. Das Dokument US 2003/015509 A1 beschreibt die Erstellung eines farbigen Glasbildes in einem mit lichtempfindlichen Komponenten versehenen Glas durch fokussierte Laserbestrahlung, aktinische Bestrahlung und nachfolgende Aufheizung. Beide Dokumente geben jedoch keine Hinweise auf Anwendungen bei der Herstellung von Einscheibensicherheitsglas.

Aufgabe der Erfindung ist es daher, ein Verfahren bereitzustellen, mit dem eine Markierung von Einscheibensicherheitsglas geschaffen wird, an der es unmittelbar erkennbar ist, dass das Glas die notwendige Temperaturbehandlung zur Herstellung von Einscheibensicherheitsglas durchlaufen hat und insbesondere dass hierbei die nötigen Randbedingungen eingehalten wurden.

Diese Aufgabe wird erfindungsgemäß dadurch gelöst, dass zunächst ein Einscheibenglas vor einer Temperaturbehandlung mit wenigstens einer metallpartikelhaltigen und/oder metallionenhaltigen Markierung versehen wird, die durch Laserbestrahlung eines auf dem Einscheibenglas angeordneten Metallionenspendermediums erzeugt wird.

In einem weiteren Verfahrensschritt wird das Einscheibenglas sodann einer Temperaturbehandlung unterzogen, um Einscheibensicherheitsglas zu bilden, wobei sich durch die Temperaturbehandlung wenigstens eine Markierung ändert. Hierdurch wird es überprüfbar, ob eine Änderung, insbesondere eine gewünschte bzw. erwartete Änderung wenigstens einer Markierung des Glases vorliegt, um so das Durchführen der Temperaturbehandlung und insbesondere das korrekte Durchführen, d.h. das Einhalten vorgegebener Parameter, wie Dauer- und Temperaturniveau, zu verifizieren.

In besonders bevorzugter Ausgestaltung des erfindungsgemäßen Verfahrens kann es dabei vorgesehen sein, dass eine Markierung vor der Temperaturbehandlung erzeugt wird durch ein Eindiffundieren von Metallionen aus dem Spendermedium in das Glas aufgrund des Wärmeeintrags durch das Laserlicht und Reduzieren der Metallionen im Glas zu Metallpartikeln. Hierbei kann insbesondere durch Variation der Laserbestrahlung, beispielsweise Intensität, Fokusgröße, Dauer etc. die Stärke der Eindiffusion von Metallionen in das Glas sowie auch die Stärke der Reduktion und gegebenenfalls eines Partikelwachstums beeinfilusst werden. Eine derart erzeugte Markierung zeichnet sich des Weiteren dadurch aus, dass sie im Volumen des Glases angeordnet ist und insoweit sich jeglicher Manipulierbarkeit von außen entzieht.

Gemäß einer weiteren Ausgestaltung des erfindungsgemäßen Verfahrens kann es vorgesehen sein, dass eine Markierung vor der Temperaturbehandlung erzeugt wird durch ein Reduzieren der Metallionen des Spendermediums in der Umgebungsatmosphäre und ein Ablagern der so erzeugten Metallpartikel auf der Oberfläche des Einscheibenglases.

Insbesondere kann dieser Verfahrensschritt gleichzeitig mit dem vorgenannten Verfahrensschritt stattfinden, bei entsprechender Wahl der Laserbestrahlungsparameter, wie vorgenannt. Es kann sich somit in ein- und demselben Verfahrensschritt eine zweifache Markierung des Glases ergeben, nämlich einerseits im Volumen durch die vorbeschriebene Eindiffusion von Metallionen und andererseits durch Ablagerung atomaren Metalls auf der Oberfläche.

Beide möglichen Markierungsarten können dabei im weiteren Verlauf der Behandlung des Einscheibenglases, also insbesondere der Temperaturbehandlung, um Einscheibensicherheitsglas zu bilden, unterschiedliche Änderungen erfahren, so dass eine Prüfung der Temperaturbehandlung gegebenenfalls auch anhand dieser beiden Markierungen unabhängig oder in Kombination erfolgen kann.

Gemäß einem weiteren bevorzugten Verfahrensschritt kann es vorgesehen sein, dass eine Markierung vor der Temperaturbehandlung erzeugt wird durch eine Ablagerung von Verbrennungsrückständen des Spendermediums oder eines das Spendermedium tragenden Materials aufgrund der Laserbestrahlung. So kann beispielsweise durch die Bestrahlung des Spendermediums oder des dieses Spendermedium tragenden Materials mit der Laserstrahlung neben den vorbeschriebenen Verfahrensschritten des Eindiffundierens und gegebenenfalls der Ablagerung atomaren Metalls gleichzeitig bei entsprechender Auslegung der Laserbestrahlung auch eine Verbrennung des Spendermediums oder des dieses Spendermedium tragenden Materials hervorgerufen werden, so dass sich entsprechende Verbrennungsablagerungen auf der Oberfläche des Einscheibenglases ergeben können.

Hier kann es bevorzugt vorgesehen sein, dass innerhalb ein- und desselben Verfahrensschrittes, nämlich der Beleuchtung des Einscheibenglases mit Laserstrahlung auf ein Spendermedium alle drei vorgenannten Markierungen zeitgleich erzeugt werden.

Bezüglich der beiden zuerst genannten Markierungen, d.h. einerseits durch Eindiffusion von Ionen und andererseits durch Ablagerung atomaren Metalls, ist festzustellen, dass es sich um Markierungen handelt, die nur relativ geringen Kontrast zur Umgebung des transparenten Glasmaterials aufweisen und somit nur schwer lesbar sind, insbesondere wenn eine Maschinenlesbarkeit durch eine entsprechend vorgesehene Vorrichtung gewünscht ist.

An dieser Stelle ist insbesondere die dritte Art der Markierung durch Verbrennungsrückstände besonders vorteilhaft, da sich hierdurch eine sehr kontraststarke Oberflächenmarkierung desselben Inhaltes wie die beiden vorgenannten Markierungen ergibt, die üblicherweise aufgrund ihres hohen Kontrastes leichter lesbar ist, insbesondere mittels maschineller Lesevorrichtungen.

Gemäß einer weiteren Ausgestaltung des erfindungsgemäßen Verfahrens kann es somit vorgesehen sein, vor einer Temperaturbehandlung zur Ausbildung des Einscheibensicherheitsglases wenigstens eine der drei vorgenannten Markierungen zu lesen, wobei hier insbesondere die Markierung aufgrund Verbrennungsrückständen aufgrund der Einfachheit der Lesbarkeit favorisiert wird. Es kann so durch das Lesen insbesondere der letztgenannten Markierung eine Referenz erstellt werden, die zu einem späteren Vergleich herangezogen werden kann.

Nach dem erfindungsgemäßen Verfahren kann die Temperaturbehandlung zur Ausbildung von Einscheibensicherheitsglas bewirken, dass die Farbe der im Volumen des Einscheibenglases bzw. nach der Temperaturbehandlung des Einscheibensicherheitsglases befindlichen Markierung aus Metallpartikeln und/oder Metallionen geändert wird. Beispielsweise kann die Änderung der Farbe dieser Markierung abhängig sein von der Dauer und/oder der Temperatur der Temperaturbehandlung. Beispielsweise kann es vorgesehen sein, mit Silberionen bzw. nach Eindiffusion und Reduktion mit Silberpartikeln bei der Markierung im Volumen des Glases zu arbeiten. Eine derartige Markierung ist üblicherweise ohne weitere Temperaturbehandlung hinsichtlich seiner Farberscheinung bräunlich, oft auch als sepia bezeichnet.

Nach der Temperaturbehandlung kann eine derartige Markierung jedoch verschiedene Farben annehmen, wobei die Verfärbungen wie vorgenannt abhängig sein können von Dauer und der erreichten Temperatur. Es besteht daher die Möglichkeit, anhand der erhaltenen Farbänderung Rückschlüsse darauf zu ziehen, ob die Temperaturbehandlung zur Herstellung von Einscheibensicherheitsglas durchgeführt wurde und zum anderen gegebenenfalls auch, ob sie korrekt durchgeführt wurde, d.h. mit den richtigen Parametern von Dauer und Temperatur.

Um Silberionen mittels des vorgenannten Verfahrensschrittes der Laserbeleuchtung in das Glasmedium einzutragen, kann es vorgesehen sein, dass ein silberionenhaltiges Spendermedium eingesetzt wird. Beispielsweise kann es sich hierbei um eine Trägerfolie handeln, die ein derartiges Spendermedium trägt. Grundsätzlich kann es jedoch im Rahmen der Erfindung vorgesehen sein, beliebige metallionenhaltige Spendermedien einzusetzen, wobei es insbesondere von der Art der Metallionen, also insbesondere von der Metallart abhängig ist, welche Ursprungsfarben vor der Temperaturbehandlung und Änderungen der Farben nach der Temperaturbehandlung entstehen.

Nach dem erfindungsgemäßen Verfahren kann es auch vorgesehen sein, dass durch eine Temperaturbehandlung eine Oberflächenmarkierung entfernt wird, insbesondere die reinmetallische Ablagerung. Dies kann beispielsweise dadurch erfolgen, dass die atomaren metallischen Ablagerungen auf der Oberfläche in das Glasmaterial eindiffundieren oder durch die Temperaturbehandlung weggebrannt werden, beispielsweise durch Oxidationseffekte. So stellt die Tatsache, dass nach einer Temperaturbehandlung die reinmetallisch atomare Ablagerung auf der Oberfläche des Glases nicht mehr vorhanden ist, einen Hinweis dafür dar, dass die Temperaturbehandlung einerseits durchgeführt wurde und andererseits auch mit den richtigen Parametern durchgeführt wurde. So kann insbesondere die Wahl der Parameter der Laserbestrahlung derart gewählt sein, dass sich die reinmetallische Oberflächenmarkierung nur dann während der Temperaturbehandlung vollständig auflöst, wenn Dauer und Temperaturniveau eingehalten wird. Dies kann insbesondere durch die Stärke bzw. Dicke der Oberflächenmarkierung bei der Herstellung der Laserbestrahlung erreicht werden. So wird bei einer entsprechend gewählten Dicke ein zu geringes Temperaturniveau bzw. eine zu geringe Dauer der Temperaturbehandlung nicht ausreichend sein, um die rein metallische Ablagerung zu entfernen, so dass das Vorhandensein nach der Temperaturbehandlung anzeigt, dass diese nicht ausreichend war.

Es ergeben sich somit im Rahmen der Erfindung bereits zwei mögliche Kriterien, um die Durchführung der Temperaturbehandlung einerseits und die Einhaltung der notwendigen Parameter andererseits zu prüfen. Gegebenenfalls kann auch die Oberflächenmarkierung durch Verbrennungsrückstände im Rahmen des Verfahrens eingesetzt werden, da beispielsweise auch diese Verbrennungsrückstände durch die Temperaturbehandlung entfernt werden können. Gegebenenfalls kann es ebenso vorgesehen sein, diese Verbrennungsrückstände vor der Temperaturbehandlung durch einen Reinigungsprozess, beispielsweise durch einen Waschprozess, zu entfernen, insbesondere, um eine Abdeckung der rein metallischen Oberflächenmarkierung durch die Verbrennungsrückstände während der Temperaturbehandlung zu verhindern.

Um hier weiterhin beeinflussen zu können, ob überhaupt Verbrennungsrückstände entstehen bzw, in welcher Stärke dies erfolgt, kann das Spendermedium und/oder ein Träger des Spendermediums derart ausgewählt sein, dass dieses Spendermedium bzw. der Träger bei der eingesetzten Laserwellenlänge seine maximale Absorption aufweist. Dies kann beispielsweise durch eine Einfärbung erfolgen. Wird beispielsweise ein grüner Laser, z.B. ein frequenzverdoppelter Nd:YAG-Laser, verwendet, so wird bevorzugt ein Spendermedium oder ein Träger des Spendermediums mit roter Einfärbung für maximale Absorption gewählt. So wird sicher gestellt, dass in genügender Weise Spendermedium oder Träger bei der Laserbestrahlung verbrennen und eine entsprechende Oberflächenmarkierung hinterlassen, die zumindest vor der Temperaturbehandlung auf einfache Weise maschinell gelesen werden kann.

Im Rahmen des erfindungsgemäßen Verfahrens kann es vorgesehen sein, dass nach einer Temperaturbehandlung zur Herstellung von Einscheibensicherheitsglas automatisch eine Überprüfung der vorgenommenen Markierungen durchgeführt wird. Hierfür können ebenso wiederum automatische maschinelle Lesevorrichtungen eingesetzt werden. So kann unmittelbar im Herstellungsprozess die Durchführung und Einhaltung der nötigen Parameter der Temperaturbehandlung verifiziert werden. Gegebenenfalls kann es auch vorgesehen sein, eine nachträgliche Überprüfung des Glases erst bei Beanstandungen vorzunehmen.

So kann es beispielsweise vorgesehen sein, dass ein Vergleich erfolgt von wenigstens einer nach der Temperaturbehandlung gelesenen Markierung mit wenigstens einer vor der Temperaturbehandlung vorgenommenen Markierung. Hierfür können gegebenenfalls unterschiedliche Leseverfahren eingesetzt werden. Zu diesem Vergleich können auch Markierungen unterschiedlicher Art herangezogen werden bezogen auf die vorgenannten drei Arten. Dies soll an einem Beispiel verdeutlicht werden.

Beispielsweise kann vor der Temperaturbehandlung die Markierung durch Verbrennungsrückstände gelesen werden, wohingegen nach der Temperaturbehandlung diese Verbrennungsrückstände aufgrund der Temperaturbehandlung z.B. nicht mehr vorhanden sein können. Wird demnach dasselbe Leseverfahren eingesetzt, so wird beim Lesen dieser Markierung nach der Temperaturbehandlung keine solche Markierung mehr festgestellt.

Ebenso kann mit der rein metallischen Oberflächenmarkierung vorgegangen werden. Wird beispielsweise ein Leseverfahren eingesetzt, um diese rein metallische Oberflächenmarkierung zu lesen, so kann nach einer korrekt durchgeführten Temperaturbehandlung diese Markierung nicht mehr nachgewiesen werden.

Darüber hinaus kann es vorgesehen sein, mittels eines speziell auf die zu erwartende Verfärbung der Volumenmarkierung abgestellten Leseverfahrens zu prüfen, ob die Markierung im Inneren des Glases aufgrund der Eindiffusion von Ionen die gewünschte bzw. erwartete Verfärbung erfahren hat. Sodann kann auch hieraus ein Rückschluss gezogen werden, dass die Temperaturbehandlung mit den richtigen Parametern durchgeführt wurde.

Aufgrund eines Lesens einer Information in einer Markierung vor der Temperaturbehandlung z.B. des atomaren Oberflächenmetalls oder der Verbrennungsrückstände ist bekannt welche Information die behandelte Scheibe in der Markierung enthalten soll. Nach der Temperaturbehandlung kann dann z.B. versucht werden, nur die Markierung im Volumen des Glases zu lesen, was bei angepasstem Leseverfahren nur möglich ist, wenn die erwartete Verfärbung stattgefunden hat. Wird die ursprünglich gelesene Information somit auch nach der Temperaturbehandlung mit dem anderen Verfahren gelesen, so hat die Behandlung korrekt stattgefunden.

Da es sich insbesondere bei der Markierung im Volumen des Glases um eine Markierung mit geringem Kontrast handelt, kann es dabei vorgesehen sein, während des Lesens dieser Markierung ein Leseverfahren einzusetzen, bei dem gleichzeitig das Glas mit UV-Licht beleuchtet wird. Hierdurch kann eine Steigerung des Kontrastes zwischen der Markierung und der transparenten Umgebung der Markierung im Glas hervorgerufen werden.

Zum einen beispielsweise einerseits dadurch, dass die Glasumgebung der Markierung zur Fluoreszenz angeregt wird, wohingegen die Markierung selbst nicht leuchtet. Andererseits kann durch eine UV-Lichtbestrahlung zunächst Fluoreszenzlicht in der Glasscheibe erzeugt werden, welches sich zwischen den Scheibenoberflächen durch Totalreflexion ausbreitet und die Markierung beleuchtet, so dass aufgrund von Brechungsindexänderungen bei der Markierung eine Auskopplung des Fluoreszenzlichtes erfolgt und so die Markierung hell erscheint und hierdurch leichter maschinell lesbar ist.

Das vorgenannte erfindungsgemäße Verfahren bietet somit zusammengefasst zwei bis gegebenenfalls drei Markierungstypen, die alle gegebenenfalls mittels ein- und desselben Verfahrensschrittes der Laserbeleuchtung durch ein Spendermedium erzeugt werden können, wobei eine Änderung dieser Markierungen, zumindest einer dieser Markierungen während eines Temperaturbehandlungsprozesses zur Herstellung von Einscheibensicherheitsglas Rückschlüsse darüber zulässt, ob die Temperaturbehandlung durchgeführt wurde und ob die Parameter hierfür eingehalten wurden. Das erfindungsgemäße Verfahren bietet somit eine einfache kostengünstige Möglichkeit, um eine Markierung für Einscheibensicherheitsglas herzustellen und so um eine Überprüfung des Einscheibensicherheitsglases durchführen zu können.

Die nachfolgende Figur verdeutlicht die möglichen Verfahrensschritte.

Es ist erkennbar, dass im Schritt A die Oberfläche einer Glasscheibe 1 zumindest in dem Bereich der Glasscheibe 1, in welchen eine Markierung angeordnet werden soll mit einem Spendermedium 2 für Silberionen versehen ist. Dieses Spendermedium 2 kann z.B. auf einer hier nicht dargestellten Trägerfolie angeordnet sein. Somit ist die Glasscheibe 1 präpariert, um eine Markierung zu erhalten.

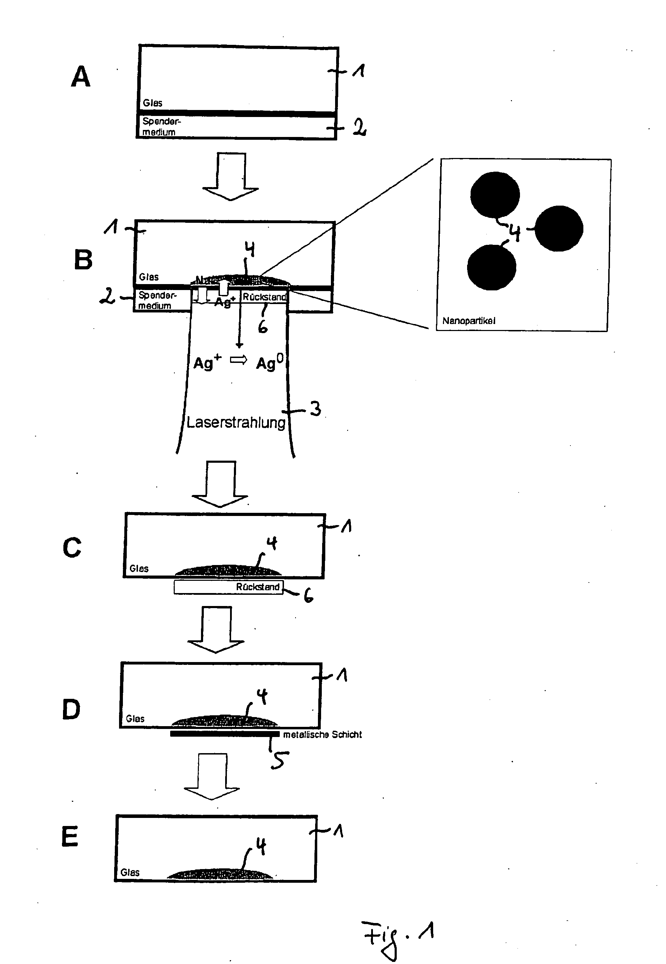

Im Schritt B wird mittels eines fokussierten Laserstrahles 3 durch das Spendermedium 2 hindurch die Glasscheibe 1 beleuchtet, wobei der Laserstrahl 3 gepulst oder kontinuierlich betrieben wird und eine Trajektorie abfährt, um eine Markierung zu schreiben. Hierbei findet aufgrund des Wärmeeintrags ein Austausch von Natrium- und Silberionen statt, wobei die Silberionen in das Glas der Glasscheibe 1 eindiffundieren und sich dort oberflächennah einlagern und zumindest zum Teil reduziert werden zu Silberpartikeln 4. Gleichzeitig wird auf der Oberfläche der Glasscheibe 2 eine reinmetallische Silberschicht 5 abgelagert, die unter den Verbrennungsrückständen 6 des Spendermediums 2 liegt. Dies zeigt die Abbildung gemäß Schritt C. Rechtseitig ist im Schritt B der Querschnitt einer Anordnung von Silber-Nanopartikeln 4 einer Markierung dargestellt, die mittels des Laserstrahles 3 in das Glas 1 eingetragen wurden.

Die kontraststarke Markierung durch die Verbrennungsrückstände 6 kann nunmehr z.B. maschinell gelesen und anschließend gemäß Schritt D z.B, durch einen Waschprozess entfernt werden, so dass die reinmetallische Silberschicht 5 erkennbar ist, wie es Schritt D zeigt.

Nach dem Schritt D wird die Temperaturbehandlung durchgeführt zur Herstellung von Einscheibensicherheitsglas. Hierbei verändert sich zum einen die Farbe der Ansammlung 4 von Silberionen und -partikeln und es können zum anderen weitere Silberpartikel in die Glasoberfläche aus der reinen Silberschicht 5 diffundieren.

Dies ist im Schritt E dargestellt, wo die reine Silberschicht 5 aufgrund der Temperaturbehandlung durch Diffusion ins Glasvolumen und ggfs. Oxidation oder andere Oberflächenprozesse entfernt wurde. Durch die Änderungen im oberflächennahen Volumenbereich der Glasscheibe 1 und auf der Oberfläche kann die Markierung nach der Temperaturbehandlung eindeutig unterschieden werden von einer Markierung vor der Temperaturbehandlung, so dass ein Nachweis für die Durchführung der Temperaturbehandlung vorliegt.

## Patentansprüche

1. Verfahren zur Markierung von Einscheibensicherheitsglas, welches durch eine Temperaturbehandlung aus Einscheibenglas hergestellt wird, **gekennzeichnet durch** folgende Verfahrensschritte:
a. ein Einscheibenglas (1) wird vor einer Temperaturbehandlung mit wenigstens einer metallpartikelhaltigen und/oder metallionenhaltigen Markierung versehen, die **durch** Laserbestrahlung (3) eines auf dem Einscheibenglas (1) angeordneten Metallionen-Spendermediums (2) erzeugt wird, wobei eine Markierung vor der Temperaturbehandlung erzeugt wird **durch** ein Eindiffundieren von Metallionen aus dem Spendermedium (2) in das Glas (1) aufgrund des Wärmeeintrages durch das Laserlicht (3) und Reduzieren der Metallionen im Glas (1) zu Metallpartikeln (4)
b. das Einscheibenglas (1) wird einer Temperaturbehandlung unterzogen, um Einscheibensicherheitsglas (1) zu bilden, wobei sich **durch** die Temperaturbehandlung wenigstens eine Markierung ändert,
wodurch prüfbar ist, ob eine Änderung wenigstens einer Markierung vorliegt, und das Durchführen der Temperaturbehandlung verifizierbar ist.

2. Verfahren nach Anspruch 1, **dadurch gekennzeichnet, dass** eine Markierung vor der Temperaturbehandlung erzeugt wird durch ein Reduzieren der Metallionen des Spendermediums (2) in der Umgebungsatmosphäre und ein Ablagern der so erzeugten Metallpartikel (5) auf der Oberfläche des Einscheibenglases (1).

3. Verfahren nach einem der vorherigen Ansprüche, dadurch gekenntzeichnet dass eine Markierung vor der Temperaturbehandlung erzeugt wird durch eine Ablagerung von Verbrennungsrückständen (6) des Spendermediums (2) oder eines das Spendermedium (2) tragenden Materiales aufgrund der Laserbestrahlung (3).

4. Verfahren nach einem der vorherigen Ansprüche, **dadurch gekennzeichnet, dass** eine Markierung vor einer Temperaturbehandlung gelesen wird, insbesondere um eine Referenz zu bilden.

5. Verfahren nach einem der vorherigen Ansprüche, **dadurch gekennzeichnet, dass** sich durch eine Temperaturbehandlung die Farbe der im Volumen des Einscheibensicherheitsglases (1) befindlichen Markierung aus Metallpartikeln (4) und/oder Metallionen (4) ändert.

6. Verfahren nach einem der vorherigen Ansprüche, **dadurch gekennzeichnet, dass** durch eine Temperaturbehandlung eine Oberflächenmarkierung (5,6) entfernt wird, insbesondere die reinmetallische Ablagerung (5).

7. Verfahren nach einem der vorherigen Ansprüche, **dadurch gekennzeichnet, dass** die Änderung, insbesondere eine Farbänderung abhängig ist von der Dauer und/oder der Temperatur der Temperaturbehandlung.

8. Verfahren nach einem der vorherigen Ansprüche, **dadurch gekennzeichnet, dass** ein Silberionen-haltiges Spendermedium (2) eingesetzt wird.

9. Verfahren nach einem der vorherigen Ansprüche, **dadurch gekennzeichnet, dass** das Spendermedium (2) und/oder ein Träger des Spendermediums (2) bei der eingesetzten Laserwellenlänge seine maximale Absorption aufweist, insbesondere durch Einfärbung, um ein Verbrennen bei Laserbestrahlung (3) zu bewirken.

10. Verfahren nach einem der vorherigen Ansprüche, **dadurch gekennzeichnet, dass** nach einer Temperaturbehandlung eine Prüfung wenigstens einer Markierung, insbesondere automatisch mittels eines dafür vorgesehenen Lesegerätes, erfolgt.

11. Verfahren nach einem der vorherigen Ansprüche, **dadurch gekennzeichnet, dass** eine nach der Temperaturbehandlung gelesene Markierung verglichen wird mit einer vor der Temperaturbehandlung gelesenen Markierung, insbesondere durch Lesen mittels verschiedener Leseverfahren.

12. Verfahren nach einem der vorherigen Ansprüche, **dadurch gekennzeichnet, dass** bei einer Prüfung das Glas (1) mit UV-Licht beleuchtet wird zur Steigerung des Kontrastes zwischen einer Markierung und der transparenten Umgebung der Markierung.

## Claims

1. Method for marking single pane security glass which is manufactured from single-pane glass by temperature treatment,
**characterised by** the following method steps:
a. A single pane piece of glass (1) is provided, before a temperature treatment, with at least one marking containing metal particles and/or metal ions, which is produced by the laser irradiation (3) of a metal ion dispensing medium (2) arranged on the single-pane glass (1), whereby a marking is produced before the temperature treatment by the diffusion of metal ions from the dispensing medium (2) into the glass (1) as a result of the heat introduced by the laser light (3) and the reduction of the metal ions in the glass (1) to metal particles (4);
b. The single-pane glass (1) is subjected to a temperature treatment, in order to form single-pane security glass (1), whereby at least one marking is altered by the temperature treatment,
as a result of which it can be determined whether a change to at least one marking is present, and the performance of the temperature treatment is verifiable.

2. Method according to Claim 1, **characterised in that** a marking is produced before the temperature treatment by a reduction of the metal ions of the dispensing medium (2) in the ambient atmosphere and a depositing of the metal particles (5) produced in this way on the surface of the single-pane glass (1).

3. Method according to one of the foregoing Claims, **characterised in that** a marking is produced before the temperature treatment by the depositing of combustion residues (6) of the dispensing medium (2) or of a material carrying the dispensing medium (2) as a result of the laser irradiation (3).

4. Method according to one of the foregoing Claims, **characterised in that** a marking is read before a temperature treatment, in particular in order to form a reference.

5. Method according to one of the foregoing Claims, **characterised in that**, due to a temperature treatment, the colour changes of the marking formed from metal particles (4) and/or metal ions (4), located in the volume of the single-pane safety glass (1).

6. Method according to one of the foregoing Claims, **characterised in that**, as a result of a temperature treatment, a surface marking (5, 6) is removed, in particular a pure metallic deposit (5).

7. Method according to one of the foregoing Claims, **characterised in that** the change, in particular a colour change, is dependent on the duration and/or the temperature of the temperature treatment.

8. Method according to one of the foregoing Claims, **characterised in that** a dispensing medium (2) containing silver ions is used.

9. Method according to one of the foregoing Claims, **characterised in that** the dispensing medium (2) and/or a carrier of the dispensing medium (2) exhibits its maximum absorption at the laser wavelength used, in particular by colouring, in order to cause combustion under laser radiation (3).

10. Method according to one of the foregoing Claims, **characterised in that** after a temperature treatment a check is carried out of at least one marking, in particular automatically by means of a reading device provided for that purpose.

11. Method according to one of the foregoing Claims, **characterised in that** a marking which is read after the temperature treatment is compared with a marking read before the temperature treatment, in particular by reading by means of different reading processes.

12. Method according to one of the foregoing Claims, **characterised in that** during an examination the glass (1) is illuminated with UV light in order to increase the contrast between a marking and the transparent surrounding of the marking.

## Revendications

1. Procédé pour marquer du verre de sécurité trempé qui est fabriqué par un traitement thermique à partir de verre trempé,
**caractérisé par** les étapes de procédé suivantes :
a. un verre trempé (1) est muni d'au moins un marquage comprenant des particules métalliques et/ou des ions métalliques qui sont générés par irradiation laser (3) à partir d'un milieu donneur d'ions métalliques (2) disposé sur le verre trempé (1), un marquage étant réalisé avant le traitement thermique par une diffusion d'ions métalliques du milieu donneur (2) à l'intérieur du verre (2) du fait de l'apport de chaleur provoqué par la lumière laser (3), et par une réduction des ions métalliques en particules métalliques (4) dans le verre (1)
b. le verre trempé (1) est soumis à un traitement thermique afin de former un verre de sécurité trempé (1), au moins un marquage étant modifié par le traitement thermique,
par lesquelles il est possible de vérifier qu'une modification d'au moins un marquage est présente et que l'exécution du traitement thermique est vérifiable.

2. Procédé selon la revendication 1 **caractérisé en ce que** le marquage est réalisé avant le traitement thermique par une réduction des ions métalliques du milieu donneur (2) dans l'atmosphère ambiante et par un dépôt des particules métalliques ainsi générées (5) sur la surface du verre trempé (1).

3. Procédé selon l'une des revendications précédentes **caractérisé en ce qu'**un marquage est réalisé avant le traitement thermique par un dépôt de résidus de combustion (6) du milieu donneur (2) ou d'un matériau support du milieu donneur (2) du fait de l'irradiation laser (3) .

4. Procédé selon l'une des revendications précédentes **caractérisé en ce qu'**un marquage est lu avant le traitement thermique, en particulier pour créer une référence.

5. Procédé selon l'une des revendications précédentes **caractérisé en ce que** la couleur du marquage de particules métalliques (4) et/ou d'ions métalliques (4) se trouvant dans le volume du verre de sécurité trempé (1) est modifiée par un traitement thermique.

6. Procédé selon l'une des revendications précédentes **caractérisé en ce qu'**un marquage de surface (5, 6) soit enlevé par un traitement thermique, en particulier un dépôt purement métallique (5).

7. Procédé selon l'une des revendications précédentes **caractérisé en ce que** la modification, en particulier une modification de la couleur est fonction de la durée et/ou de la température du traitement thermique.

8. Procédé selon l'une des revendications précédentes **caractérisé en ce qu'**un milieu donneur (2) contenant des ions argent est utilisé.

9. Procédé selon l'une des revendications précédentes **caractérisé en ce que** le milieu donneur (2) et/ou le support du milieu donneur (2) présente son absorption maximale à la longueur d'onde laser utilisée, en particulier par une coloration à coeur pour provoquer une combustion par l'irradiation laser (3).

10. Procédé selon l'une des revendications précédentes **caractérisé en ce qu'**après un traitement thermique un examen d'au moins un marquage ait lieu, en particulier réalisé automatiquement au moyen d'un appareil de lecture prévu à cet effet.

11. Procédé selon l'une des revendications précédentes **caractérisé en ce qu'**après le traitement thermique, le marquage lu est comparé avec un marquage lu avant le traitement thermique, en particulier par une lecture au moyen de divers procédés de lecture.

12. Procédé selon l'une des revendications précédentes **caractérisé en ce que** lors d'un examen, le verre (1) est illuminé par une lumière UV pour augmenter le contraste entre un marquage et l'environnement transparent du marquage.
